# FASCICULE DE BREVET EUROPEEN

(11) **EP 3 787 344 B1**
(45) Date de publication et mention de la délivrance du brevet: **13.10.2021**
(21) Numéro de dépôt: 20192653.2
(22) Date de dépôt: 25.08.2020
(51) Int. Cl.: H04W 40/22, H04W 40/24

(54) **PROCÉDÉ DE CONFIGURATION D'UN SYSTÈME D'EXTENSION DE COUVERTURE DE COMMUNICATION SANS-FIL ET UN SYSTÈME D'EXTENSION DE COUVERTURE DE COMMUNICATION SANS-FIL METTANT EN OEUVRE LEDIT PROCÉDÉ**
VERFAHREN ZUR KONFIGURATION EINES SYSTEMS ZUR ERWEITERUNG DER DRAHTLOSEN KOMMUNIKATIONSABDECKUNG, UND SYSTEM ZUR ERWEITERUNG DER DRAHTLOSEN KOMMUNIKATIONSABDECKUNG, DAS DIESES VERFAHREN UMSETZT
METHOD FOR CONFIGURING A SYSTEM FOR EXTENDING WIRELESS COMMUNICATION COVERAGE AND A SYSTEM FOR EXTENDING WIRELESS COMMUNICATION COVERAGE IMPLEMENTING SAID METHOD

(30) Priorité: 29.08.2019 FR 1909510
(43) Date de publication de la demande: 03.03.2021
(73) Titulaire: SAGEMCOM BROADBAND SAS, 92500 Rueil-Malmaison (FR)
(72) Inventeur: COLLIAUX, Mathieu, 92500 RUEIL MALMAISON (FR); ALARCON, Laurent, 92500 RUEIL MALMAISON (FR)
(74) Mandataire: Cabinet Le Guen Maillet

(56) Documents cités:
- EP-A2- 2 730 771
- WO-A1-2016/188567
- US-B2- 8 605 621

## Description

### DOMAINE TECHNIQUE

La présente invention concerne un procédé de configuration d'un système d'extension de couverture de communication sans-fil et un système d'extension de couverture de communication sans-fil mettant en œuvre ledit procédé.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des nœuds de communication, appelés simplement ci-après nœuds, interconnectés grâce à un sous-réseau d'acheminement (« backhaul subnetwork » en anglais) et mettent tous à disposition un même réseau local sans-fil WLAN (« Wireless Local Area Network » en anglais). Dans le cadre de la technologie Wi-Fi (marque déposée), tous ces points d'accès AP utilisent ainsi un même identifiant SSID (« Service Set IDentifier » en anglais) et un même mot de passe (aussi appelé clef de sécurité). Ainsi, l'extension de couverture de communication sans-fil est transparente pour les dispositifs connectés au réseau local sans-fil WLAN.

Le système d'extension de couverture de communication sans-fil est ainsi typiquement relié à l'Internet au travers d'une passerelle GW d'accès à l'Internet, par exemple grâce à un cordon Ethernet assurant le raccordement d'un nœud principal du système d'extension de couverture de communication sans-fil avec la passerelle GW. Le système d'extension de couverture de communication sans-fil sert alors de relais entre la passerelle et chaque dispositif connecté de manière filaire ou sans-fil au réseau local LAN, et sert aussi de relais entre ces différents dispositifs connectés au réseau local LAN pour leur permettre de communiquer entre eux.

Les nœuds du sous-réseau d'acheminement sont connectés les uns aux autres par une structure en forme d'arbre, un nœud pouvant alors servir de relais entre deux autres nœuds du sous-réseau d'acheminement. Les nœuds sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local WLAN lui-même. Les nœuds du sous-réseau d'acheminement communiquent ainsi entre eux grâce à des liaisons logiques, par exemple des communications IP ou des tunnels chiffrés ou des communications selon un protocole de communication propriétaire. L'établissement de ces liaisons logiques s'effectue typiquement grâce à des messages de sonde (« probe » en anglais) et de découverte (« discovery » en anglais).

Les nœuds du sous-réseau d'acheminement sont typiquement coordonnés de manière centralisée, par un nœud maître choisi parmi lesdits nœuds du sous-réseau d'acheminement. Le nœud maître peut être désigné par configuration figée ou dynamiquement par élection. Tous les nœuds du sous-réseau d'acheminement ont ainsi connaissance du nœud maître, et sont capables de l'identifier grâce à son adresse MAC (« Médium Access Control » en anglais).

Le document US8605621 décrit un procédé de découverte d'une passerelle et de routage de données vers cette passerelle, cette passerelle étant entre un réseau ad hoc et un réseau fixe dans un réseau de télécommunication hybride. Le procédé comprend la sélection d'au moins un nœud mobile du réseau ad hoc, situé à un saut de la passerelle et ayant une bonne connectivité avec cette passerelle, pour relayer au moins une partie du trafic entre les autres nœuds du réseau ad hoc et la passerelle. Le document WO2016/188567 décrit un procédé de reconfiguration dans un réseau maillé sans fil.

Dans le cas des réseaux locaux LAN chez les abonnés d'un fournisseur d'accès à l'Internet, le nœud maître est préférentiellement le nœud du sous-réseau d'acheminement qui est au plus près de la passerelle GW d'accès à l'Internet. Cela permet d'y activer spécifiquement des fonctionnalités, comme par exemple des fonctionnalités de contrôle parental, puisque le nœud maître a alors une position stratégique de concentration de flux de données en étant le nœud du système d'extension de couverture de communication sans-fil au plus près de la passerelle GW d'accès à l'Internet.

Dans le cas particulier où plusieurs nœuds sont directement reliés à la passerelle GW, si aucun nœud maître n'est désigné, il est difficile de pouvoir reconfigurer des fonctionnalités (e.g. une fonctionnalité de contrôle parental) mises en œuvre dans le système d'extension de couverture de communication sans-fil. En effet, il faudra alors reconfigurer tous les nœuds du réseau un par un ce qui n'est pas optimal.

Il est alors souhaitable de pallier ces inconvénients de l'état de la technique.

### EXPOSE DE L'INVENTION

Un objet de la présente invention est de proposer un procédé de configuration d'un système d'extension de couverture de communication sans-fil comportant un sous-réseau d'acheminement en forme d'arbre comportant une pluralité de nœuds implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local, au moins deux nœuds de ladite pluralité de nœuds étant connectés directement à une passerelle d'accès à l'Internet, dite passerelle. Le procédé comprend les étapes suivantes :
- identifier lesdits au moins deux nœuds connectés directement à ladite passerelle parmi lesdits nœuds du sous-réseau d'acheminement ;
- sélectionner un unique nœud parmi lesdits au moins deux nœuds identifiés pour être le nœud au travers duquel une configuration dudit système d'extension de couverture de communication sans-fil est définie en comparant un paramètre associé à un desdits au moins deux nœuds avec un paramètre correspondant associé à un autre desdits au moins deux nœuds, ledit paramètre pour un nœud donné étant : un nombre de nœuds dans une branche dudit arbre auquel appartient ledit nœud donné ou un paramètre de performance en termes de bande passante, de taux d'erreur et/ou de temps de latence d'un lien entre ledit nœud donné et ladite passerelle ou un temps de fonctionnement du nœud donné en tant que nœud au travers duquel une configuration dudit système d'extension de couverture de communication sans-fil est définie ou une combinaison d'au moins deux de ces paramètres; et
- envoyer la configuration du système d'extension de couverture de communication sans-fil définie depuis le nœud sélectionné vers l'ensemble des autres nœuds du sous-réseau d'acheminement.

Dans un mode de réalisation particulier, identifier lesdits au moins deux nœuds connectés à ladite passerelle parmi lesdits nœuds du sous-réseau d'acheminement comprend pour chaque nœud du sous-réseau d'acheminement:
- diffuser une requête pour localiser au moins un serveur disponible afin d'obtenir une adresse IP, ladite requête comprenant l'adresse MAC dudit nœud et une option propriétaire;
- recevoir en retour une réponse comprenant une adresse IP pour ledit nœud;
- en déduire que ledit nœud est directement connecté à ladite passerelle dans le cas où ladite réponse comprend ladite option propriétaire avec une valeur prédéfinie et en déduire que ledit nœud n'est pas directement connecté à ladite passerelle sinon.

Dans un mode de réalisation particulier, ledit serveur, ladite requête et ladite réponse sont conformes au protocole DHCPv4 ou au protocole DHCPv6.

Dans un mode de réalisation particulier, identifier lesdits au moins deux nœuds connectés à ladite passerelle parmi lesdits nœuds du sous-réseau d'acheminement comprend pour chaque nœud du sous-réseau d'acheminement:
- envoyer un paquet IP comprenant dans son entête une donnée indiquant le nombre maximal de routeurs pouvant être traversés par ledit paquet, ladite donnée ayant la valeur 1;
- en déduire que ledit nœud n'est pas directement connecté à ladite passerelle dans le cas où il reçoit en retour une réponse indiquant un dépassement de la durée de vie de ladite requête et en déduire que ledit nœud est directement connecté à ladite passerelle sinon.

Dans un mode de réalisation particulier, identifier lesdits au moins deux nœuds connectés à ladite passerelle parmi lesdits nœuds du sous-réseau d'acheminement comprend pour chaque nœud du sous-réseau d'acheminement:
- envoyer en point à multipoint une requête pour localiser au moins un routeur;
- recevoir en retour une réponse;
- en déduire que ledit nœud est directement connecté à ladite passerelle dans le cas où ladite réponse comprend une option propriétaire avec une valeur prédéfinie et en déduire que ledit nœud n'est pas directement connecté à ladite passerelle sinon.

Dans un mode de réalisation particulier, ladite requête et ladite réponse sont conformes au protocole de découverte de voisinage de IPv6.

Dans un mode de réalisation particulier, sélectionner un unique nœud parmi lesdits au moins deux nœuds identifiés comprend sélectionner le nœud appartenant à une branche dudit arbre comprenant le plus grand nombre de nœuds.

Dans un mode de réalisation particulier, sélectionner le nœud appartenant à une branche dudit arbre comprenant le plus grand nombre de nœuds comprend sélectionner le nœud ayant un plus grand numéro de série dans le cas où lesdits au moins deux nœuds identifiés appartiennent à des branches dudit arbre ayant le même nombre de nœuds.

Dans un mode de réalisation particulier, sélectionner un unique nœud parmi lesdits au moins deux nœuds identifiés comprend sélectionner le nœud dont un lien avec la passerelle est plus performant en termes de bande passante, de taux d'erreur et/ou de temps de latence.

Dans un mode de réalisation particulier, envoyer la configuration du système d'extension de couverture de communication sans-fil depuis le nœud sélectionné vers l'ensemble des autres nœuds du sous-réseau d'acheminement comprend envoyer un ensemble de paramètres permettant la configuration de fonctionnalités mise en œuvre par lesdits nœuds. Dans un mode de réalisation particulier, lesdites fonctionnalités comprennent des fonctionnalités de définition et de partage de la configuration du système d'extension de couverture de communication sans-fil, de relais DNS, de relais DHCP, de pare-feu et/ou de contrôle parental.

Il est également proposé un système d'extension de couverture de communication sans-fil comportant un sous-réseau d'acheminement en forme d'arbre comportant une pluralité de nœuds implémentant une fonctionnalité de point d'accès d'un même réseau de communication sans-fil, le système d'extension de couverture de communication sans-fil étant adapté pour permettre de connecter des dispositifs auxdits nœuds par le biais du réseau de communication sans-fil ou de manière filaire afin de former un réseau local, au moins deux nœuds de ladite pluralité de nœuds étant connectés directement à une passerelle d'accès à l'Internet, dite passerelle. Le système comprend :
- des moyens pour identifier lesdits au moins deux nœuds connectés directement à ladite passerelle parmi lesdits nœuds du sous-réseau d'acheminement ;
- des moyens pour sélectionner un unique nœud parmi lesdits au moins deux nœuds identifiés pour être le nœud au travers duquel une configuration dudit système d'extension de couverture de communication sans-fil est définie en comparant un paramètre associé à un desdits au moins deux nœuds avec un paramètre correspondant associé à un autre desdits au moins deux nœuds, ledit paramètre pour un nœud donné étant : un nombre de nœuds dans une branche dudit arbre auquel appartient ledit nœud donné ou un paramètre de performance en termes de bande passante, de taux d'erreur et/ou de temps de latence d'un lien entre ledit nœud donné et ladite passerelle ou un temps de fonctionnement du nœud donné en tant que nœud au travers duquel une configuration dudit système d'extension de couverture de communication sans-fil est définie ou une combinaison d'au moins deux de ces paramètres; et
- des moyens pour envoyer la configuration du système d'extension de couverture de communication sans-fil définie depuis le nœud sélectionné vers l'ensemble des autres nœuds du sous-réseau d'acheminement.

Il est également proposé un nœud, appelé nœud considéré, destiné à être utilisé dans un système d'extension de couverture de communication sans-fil comportant un sous-réseau d'acheminement en forme d'arbre comportant une pluralité de nœuds implémentant une fonctionnalité de point d'accès d'un même réseau de communication sans-fil dont le nœud considéré, le système d'extension de couverture de communication sans-fil étant adapté pour permettre de connecter des dispositifs auxdits nœuds par le biais du réseau de communication sans-fil ou de manière filaire afin de former un réseau local. Le nœud considéré comprend :
- des moyens pour identifier si ledit nœud considéré est directement ou indirectement connecté à ladite passerelle;
- des moyens pour déterminer si ledit nœud considéré est sélectionné parmi lesdits nœuds du sous-réseau d'acheminement directement connectés à la passerelle pour être le nœud au travers duquel une configuration dudit système d'extension de couverture de communication sans-fil est définie, ladite sélection étant effectuée en comparant un paramètre associé à un desdits au moins deux nœuds avec un paramètre correspondant associé à un autre desdits au moins deux nœuds, ledit paramètre pour un nœud donné étant : un nombre de nœuds dans une branche dudit arbre auquel appartient ledit nœud donné ou un paramètre de performance en termes de bande passante, de taux d'erreur et/ou de temps de latence d'un lien entre ledit nœud donné et ladite passerelle ou un temps de fonctionnement du nœud donné en tant que nœud au travers duquel une configuration dudit système d'extension de couverture de communication sans-fil est définie ou une combinaison d'au moins deux de ces paramètres,
- des moyens pour informer, via le sous-réseau d'acheminement, si le nœud considéré est le nœud sélectionné parmi lesdits nœuds du sous-réseau d'acheminement pour être le nœud au travers duquel la configuration dudit système d'extension de couverture de communication sans-fil est définie; et
- des moyens pour envoyer la configuration du système d'extension de couverture de communication sans-fil définie vers l'ensemble des autres nœuds du sous-réseau d'acheminement dans le cas où ledit nœud considéré est le nœud sélectionné.

Il est également proposé un programme d'ordinateur, caractérisé en ce qu'il comprend des instructions pour mettre en œuvre le procédé selon l'un des modes de réalisation décrits ci-dessus, lorsque ledit programme est exécuté par au moins un processeur.

Il est également proposé des moyens de stockage qui stockent un programme d'ordinateur comprenant des instructions pour mettre en œuvre le procédé selon l'un des modes de réalisation décrits ci-dessus, lorsque ledit programme est exécuté par au moins un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un système de communication dans lequel la présente invention peut être implémentée ;
[Fig. 2] illustre schématiquement un exemple d'architecture matérielle de tout nœud d'un sous-réseau d'acheminement selon un mode de réalisation;
[Fig. 3] illustre schématiquement un procédé de configuration d'un système d'extension de couverture de communication sans-fil selon un mode de réalisation;
[Fig. 4A] illustre schématiquement un procédé d'identification de nœuds directement reliés à une passerelle selon un mode particulier de réalisation;
[Fig. 4B] illustre schématiquement un procédé d'identification de nœuds directement reliés à une passerelle selon un mode particulier de réalisation;
[Fig. 5A] illustre schématiquement un procédé d'identification de nœuds directement reliés à une passerelle selon un mode particulier de réalisation;
[Fig. 5B] illustre schématiquement un procédé d'identification de nœuds directement reliés à une passerelle selon un mode particulier de réalisation;
[Fig. 6] illustre schématiquement un procédé d'identification de nœuds directement reliés à une passerelle selon un troisième mode de réalisation; et
[Fig. 7] illustre schématiquement un procédé de sélection d'un nœud maître principal du sous-réseau d'acheminement parmi les nœuds identifiés comme étant directement reliés à une passerelle selon un mode de réalisation.

### EXPOSE DETAILLE DE MODES DE REALISATION

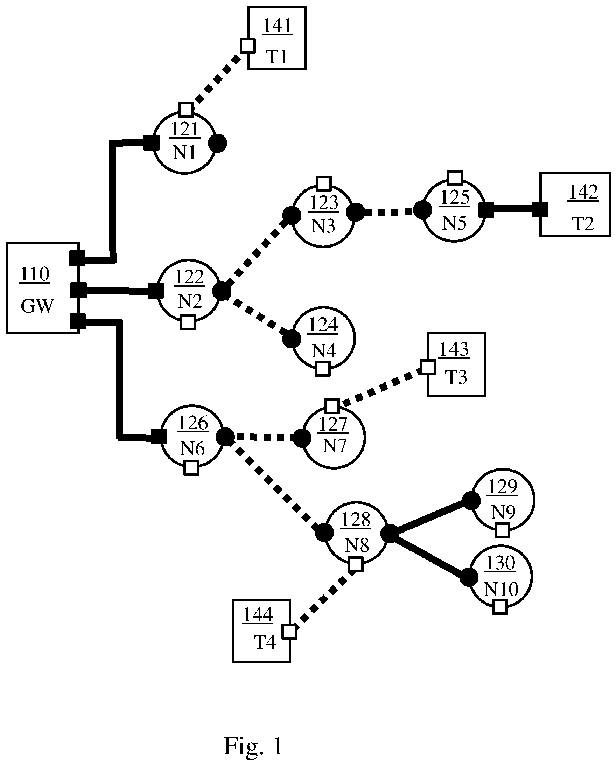

La **Fig. 1** illustre schématiquement un système de communication dans lequel la présente invention peut être implémentée. Le système de communication comporte un système d'extension de couverture de communication sans-fil construit autour d'un sous-réseau d'acheminement comportant un ensemble de nœuds N1 121, N2 122, N3 123, N4 124, N5 125, N6 126, N7 127, N8 128, N9 129 et N10 130 interconnectés. Chaque nœud d'une pluralité de nœuds du sous-réseau d'acheminement, typiquement tous les nœuds du sous-réseau d'acheminement, implémente une fonctionnalité de point d'accès AP d'un réseau local sans-fil WLAN (« Wireless Local Area Network » en anglais). Les nœuds de ladite pluralité de nœuds mettent tous à disposition un même réseau local sans-fil WLAN (même nom...). Dans le cadre de la technologie Wi-Fi (marque déposée), tous ces points d'accès AP utilisent ainsi un même identifiant SSID et un même mot de passe. La zone de couverture du réseau local sans-fil WLAN, et donc d'une manière générale du réseau local LAN ainsi constitué autour du système d'extension de couverture de communication sans-fil, est alors étendue de manière transparente pour chaque terminal, ou station, qui s'y connecte.

Les nœuds N1 121 à N10 130 du sous-réseau d'acheminement sont connectés les uns aux autres grâce à une structure en forme d'arbre, un nœud pouvant alors servir de relais entre deux autres nœuds du sous-réseau d'acheminement. Les nœuds N1 121 à N10 130 sont ainsi interconnectés grâce à des liaisons filaires, par exemple de type Ethernet, ou à des liaisons sans-fil, par exemple une liaison Wi-Fi (marque déposée) utilisant un identifiant SSID différent dudit réseau local sans-fil WLAN lui-même. Les nœuds N1 121 à N10 130 du sous-réseau d'acheminement communiquent ainsi entre eux grâce à des liaisons logiques, par exemple des communications IP ou des tunnels chiffrés ou des communications selon un protocole de communication propriétaire. Cependant, lorsqu'une interface filaire est utilisée pour le sous-réseau d'acheminement, cette interface filaire ne peut pas être utilisée à un autre dessein, notamment pas pour y connecter un terminal.

De manière illustrative, sur la Fig. 1, les nœuds N1 121, N2 122 et N6 126 sont connectés directement à une passerelle GW 110 d'accès à l'Internet. Les branches du système d'extension de couverture connectées à ces nœuds N1 121, N2 122 et N6 126 ont une topologie en étoile ou en série (« daisy chain » en anglais). La Fig. 1 montre également que le nœud N2 122 est connecté au nœud N3 123 et au nœud N4 124 grâce à une liaison sans-fil (distincte du réseau local sans-fil WLAN lui-même) représentée par un trait en pointillé, et les nœuds N9 129 et N10 130 sont connectés au nœud N8 128 grâce à une liaison filaire représentée par un trait plein. Le nœud N5 125 est connecté au nœud N3 123 grâce à une liaison sans-fil. Le nœud N6 126 est connecté au nœud N7 127 et au nœud N8 128 grâce à une liaison sans-fil.

Le système d'extension de couverture de communication sans-fil permet ainsi d'interconnecter une passerelle GW 110 d'accès à l'Internet, un terminal T1 141, un terminal T2 142, un terminal T3 143 et un terminal T4 144. Le terminal T1 141 est par exemple un téléphone intelligent (« smartphone » en anglais) connecté par une liaison sans-fil au nœud N1 121, c'est-à-dire que le terminal T1 141 est ainsi connecté via le réseau local sans-fil WLAN grâce au nœud N1 121 agissant comme point d'accès AP. Le terminal T2 142 est par exemple un téléviseur connecté par une liaison filaire au nœud N5 125. Le terminal T3 143 est par exemple une tablette connectée par une liaison sans-fil au nœud N7 127, c'est-à-dire que le terminal T3 143 est ainsi connecté via le réseau local sans-fil WLAN grâce au nœud N7 127 agissant comme point d'accès AP. Le terminal T4 144 est par exemple une unité de stockage en réseau NAS (« Network Attached Storage » en anglais) connectée par une liaison sans-fil au nœud N8 128, c'est-à-dire que le terminal T4 144 est ainsi connecté via le réseau local sans-fil WLAN grâce au nœud N8 128 agissant comme point d'accès AP.

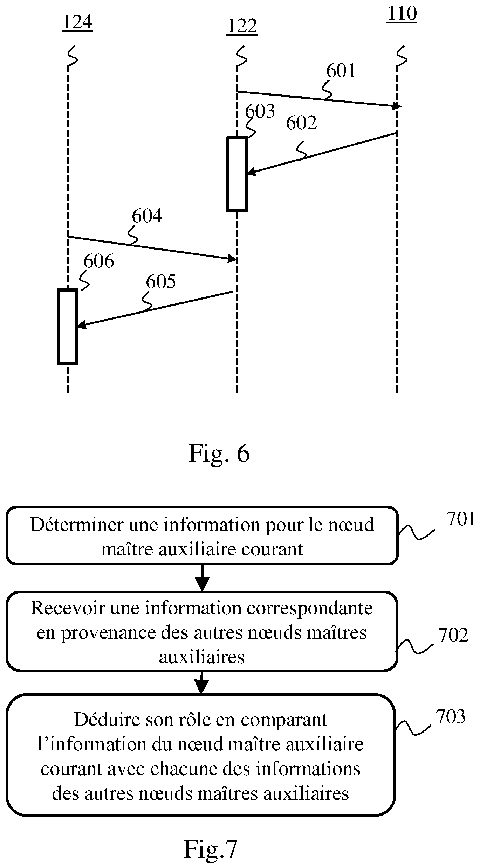

La configuration du système d'extension de couverture de communication sans-fil est définie au travers d'un nœud maître principal choisi parmi lesdits nœuds du sous-réseau d'acheminement qui sont directement reliés à la passerelle GW 110 d'accès à l'Internet, à savoir l'un des nœuds N1 121, N2 122 ou N6 126 dans le contexte de la Fig. 1. Un mode de réalisation particulier de sélection du nœud maître principal directement relié à la passerelle GW 110 d'accès à l'Internet est détaillé ci-après en relation avec la Fig. 7.

Tous les nœuds du sous-réseau d'acheminement ont connaissance de tous les autres nœuds du sous-réseau d'acheminement et sont capables de les identifier grâce à leurs adresses MAC et/ou de leurs adresses réseau (e.g., adresses IP).

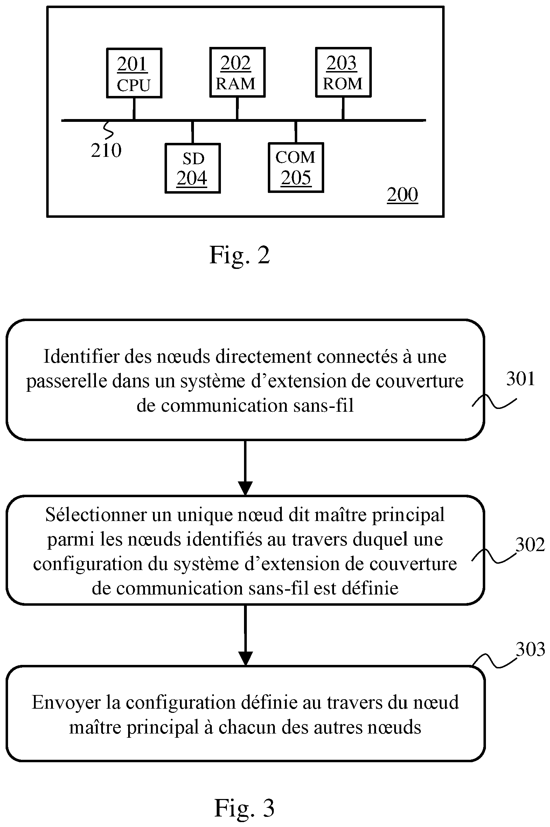

La **Fig. 2** illustre schématiquement un exemple d'architecture matérielle de tout nœud 200 du sous-réseau d'acheminement.

L'exemple d'architecture matérielle présenté comporte, reliés par un bus de communication 210 : un processeur CPU (« Central Processing Unit » en anglais) 201 ; une mémoire vive RAM (« Random Access Memory » en anglais) 202 ; une mémoire morte ROM (« Read Only Memory » en anglais) 203 ou une mémoire Flash ; une unité de stockage ou un lecteur de support de stockage, tel qu'un lecteur de cartes SD (« Secure Digital » en anglais) 204 ou un disque dur HDD (« Hard Disk Drive » en anglais) ; et au moins un ensemble d'interfaces de communication COM 205. L'ensemble d'interfaces de communication COM 205 permet d'implémenter la fonctionnalité de point d'accès AP pour étendre la couverture du réseau local sans-fil WLAN et permet de mettre en place le sous-réseau d'acheminement.

Le processeur CPU 201 est capable d'exécuter des instructions chargées dans la mémoire RAM 202 à partir de la mémoire ROM 203, d'une mémoire externe (telle qu'une carte SD), d'un support de stockage (tel que le disque dur HDD), ou d'un réseau de communication. Lors de la mise sous tension, le processeur CPU 201 est capable de lire de la mémoire RAM 202 des instructions et de les exécuter. Ces instructions forment un programme d'ordinateur causant la mise en œuvre, par le processeur CPU 201, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, les nœuds N1 121 à N10 130 comportent de la circuiterie électronique adaptée et configurée pour implémenter les procédés et étapes décrits ci-après.

La **Fig. 3** illustre schématiquement un procédé de configuration d'un système d'extension de couverture de communication sans-fil selon un mode de réalisation.

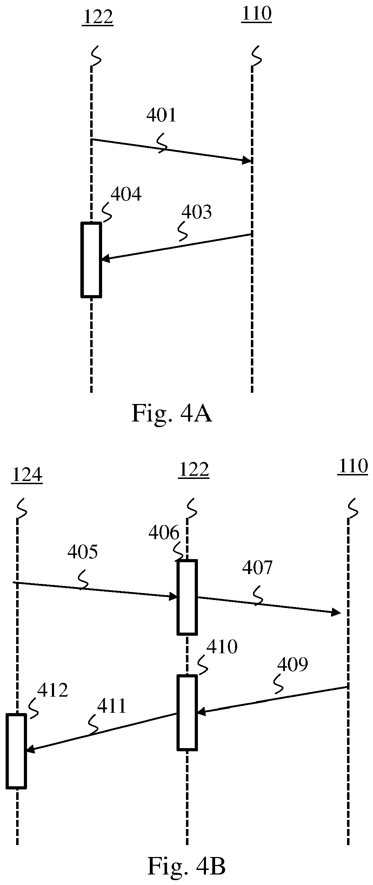

Dans une étape 301, les nœuds directement reliés à la passerelle GW 110 d'accès à l'Internet sont identifiés. A cet effet, un des procédés décrits ci-après en relation avec les Figs 4A, 4B, 5A, B et 6 est mis en œuvre. Dans la Fig. 1, les nœuds identifiés, lors de l'étape 301, sont les nœuds N1 121, N2 122 et N6 126. Un rôle particulier leur est attribué, à savoir un rôle de maître auxiliaire. En effet, ces nœuds contrôlent le trafic dans la branche qui leur est associée. Ils peuvent donc mettre en œuvre certaines fonctionnalités spécifiques, e.g. de pare-feu, de contrôle parental.

Dans une étape 302, un unique nœud est sélectionné parmi les nœuds identifiés comme étant directement reliés à la passerelle pour jouer le rôle de nœud maître principal. A cet effet, le procédé décrit ci-après en relation avec la Fig. 7 est mis en œuvre. C'est au travers de ce nœud maître principal que la configuration du système d'extension de couverture de communication sans-fil est définie. Le nœud jouant le rôle de maître principal est donc sélectionné parmi les nœuds jouant le rôle de maître auxiliaire, lesquels sont directement reliés à la passerelle GW 110. Les autres nœuds du sous-réseau d'acheminement qui ne sont ni maître principal ni maître auxiliaire sont appelés nœuds esclaves.

Chaque nœud du sous-réseau d'acheminement est apte à mettre en œuvre des fonctionnalités spécifiques en fonction notamment de son rôle (maître principal, maître auxiliaire, esclave) dans le système d'extension de couverture de communication sans-fil. Les fonctionnalités mises en œuvre sont des fonctionnalités de relais DNS (acronyme anglais de « Domain Name System »), de relais DHCP (acronyme anglais de « Dynamic Host Configuration Protocol »), de pare-feu vis-à-vis de flux de données échangés via l'Internet au travers de la passerelle GW 110, et/ou des fonctionnalités de contrôle parental vis-à-vis de flux de données échangés via l'Internet au travers de la passerelle GW 110. Un nœud implémentant la fonctionnalité de relais DHCP peut relayer des diffusions de demande d'adresse IP de clients DHCP vers un serveur DHCP. Un nœud implémentant la fonctionnalité de relais DNS peut relayer des demandes de résolution de nom de domaine vers un serveur DNS.

Ces fonctionnalités peuvent être mises en œuvre par tous les nœuds, qu'ils soient maître principal, maître auxiliaire ou esclave. Toutefois, un nœud esclave peut les mettre en œuvre de manière optionnelle. La mise en œuvre de la fonctionnalité de contrôle parental par les nœuds esclaves permet d'optimiser la bande passante. En effet, le trafic peut être contrôlé au plus près de la connexion physique afin de ne pas consommer de bande passante inutilement. Pour un nœud maître auxiliaire, seule la fonctionnalité de relais DNS est mise en œuvre de manière optionnelle, les autres étant obligatoirement mises en œuvre. Un nœud maître principal met en œuvre obligatoirement la totalité des fonctionnalités. Le nœud sélectionné comme maître principal est en outre apte à mettre en œuvre des fonctionnalités spécifiques de définition de la configuration du système d'extension de couverture de communication sans-fil, e.g. via une interface utilisateur, et de partage de cette configuration avec les autres nœuds.

Les différentes fonctionnalités de filtrage de flux de données échangés via l'Internet au travers de la passerelle GW 110 (e.g. contrôle parental ou pare-feu) peuvent être configurées par un utilisateur en fonction de ses souhaits d'administration. A titre de simple exemple illustratif, la configuration peut s'effectuer au moyen d'une interface utilisateur (« User Interface » en anglais) telle une page web embarquée dans le nœud maître principal ou bien hébergée sur un serveur distant lequel est en relation avec le nœud maître principal. Dans une variante, la configuration des fonctionnalités de filtrage peut s'effectuer grâce à une application spécifique exécutée par un des terminaux connectés au réseau Wi-Fi distribué, laquelle contrôle le nœud maître principal. La configuration comprend l'ensemble des éléments (e.g. règles et paramètres) associés à une fonctionnalité et permettant de la mettre en œuvre.

Dans un exemple particulier de réalisation, la configuration du contrôle parental est définie dans le nœud maître principal par un utilisateur et comprend par exemple les règles suivantes: l'interdiction faite à un équipement d'accéder au flux de données, le blocage de certains sites web, le filtrage des paquets reçus par un équipement particulier lequel est identifié par son adresse MAC, le fait de rediriger une requête externe vers une page locale, etc. La configuration comprend également les paramètres associés à ces règles, e.g. les adresses URL (acronyme anglais de « Uniform Resource Locator ») des sites web à bloquer, l'adresse MAC de l'équipement particulier, des plages horaires pour l'utilisation d'un équipement, des limites horaires pour l'utilisation d'un équipement, etc.

Dans une étape 303, le nœud maître principal sélectionné à l'étape 302 envoie la configuration des différentes fonctionnalités à chacun des nœuds maîtres auxiliaires du sous-réseau d'acheminement. Dans une variante, le nœud maître principal sélectionné à l'étape 302 envoie la configuration des différentes fonctionnalités à tous les nœuds (maîtres auxiliaires et esclaves) du sous-réseau d'acheminement.

Dans un mode particulier de réalisation, le nœud maître principal sélectionné à l'étape 302 envoie la configuration de toutes les fonctionnalités du système (e.g. pare-feu, contrôle parental) à tous les nœuds (maîtres auxiliaires et esclaves) du sous-réseau d'acheminement. La transmission d'une configuration par le nœud maître principal peut se faire au moyen d'une commande de synchronisation de configuration. Une telle commande comprend une description de la configuration. A titre de simple exemple illustratif, la commande peut comprendre une indication de l'ajout d'une règle de contrôle parental et des paramètres associés à la règle de contrôle parental. Cette commande est alors envoyée aux nœuds maîtres auxiliaires et optionnellement aux nœuds esclaves. A réception de la commande, les nœuds maîtres auxiliaires (et optionnellement aux nœuds esclaves) stockent en mémoire la configuration de la fonctionnalité de contrôle parental et appliquent le contrôle parental avec les informations de configuration stockées.

Un nœud utilise uniquement la configuration correspondant aux fonctionnalités qu'il met en œuvre. En revanche, il a accès à tout instant à la configuration de l'ensemble des fonctionnalités du système, ce qui est particulièrement avantageux en cas de changement de rôle. Ainsi, un nœud maître auxiliaire devenant nœud maître principal aura connaissance de la configuration permettant de mettre en œuvre des fonctionnalités qu'il ne mettait pas en œuvre auparavant, e.g. la fonctionnalité de partage de configuration. Dans un exemple de réalisation, l'interface utilisateur, e.g. la page web, utilisée pour la configuration est embarquée sur tous les nœuds. Ainsi, la configuration peut s'effectuer au travers de cette interface dans un nœud nouvellement devenu nœud maître principal. L'adaptation des règles de contrôle de trafic (e.g. pour le filtrage des flux de données) à la situation de chaque branche, et donc de chaque nœud; peut être faite par le nœud maître principal à partir de sa connaissance éventuelle de l'ensemble de la topologie du sous-réseau d'acheminement et par chacun des nœuds maîtres auxiliaires en fonction de leur connaissance propre de la branche dont ils ont la charge.

Les **Figs 4A** et **4B** illustrent schématiquement un procédé d'identification des nœuds qui sont directement reliés à la passerelle GW 110 d'accès à l'Internet selon un premier mode de réalisation qui met en œuvre au moins une option propriétaire du protocole DHCPv4 (DHCP est l'acronyme anglais de « Dynamic Host Configuration Protocol ») défini par le document normatif RFC 2131. Le procédé décrit en lien avec le protocole DHCPv4 s'applique de la même manière au protocole DHCPv6. De manière générale, ce mode de réalisation s'applique à tout protocole mettant en œuvre des échanges de messages de type DHCPDISCOVER et DHCPOFFER.

Les Figs 4A et 4B décrivent le procédé d'identification pour la branche comprenant les nœuds N2 et N4. Le même procédé s'applique aux autres nœuds du sous réseau d'acheminement. La Fig. 4A décrit le procédé en lien avec le nœud N2 122 et la Fig. 4B décrit le procédé en lien avec le nœud N4 124.

Lors de sa mise en service, un nœud du sous-réseau d'acheminement doit obtenir un bail (attribution d'adresse IP) fourni par un serveur DHCP tel que défini par le document normatif RFC 1531, modifié et complété par les documents normatifs RFC 1534, RFC 2131 et RFC 2132. Le serveur DHCP est généralement, mais non nécessairement, intégré à la passerelle GW 110.

Dans une étape 401, le nœud N2 122 diffuse (« broadcast » en anglais) à sa mise sous-tension une requête de type DHCPDISCOVER sur le sous-réseau d'acheminement pour localiser un serveur de type DHCP et obtenir une adresse IP. La requête contient au moins une option propriétaire, e.g. située dans l'intervalle 224 à 254. Les options situées dans l'intervalle 224 à 254 sont réservées à un usage privé (« private use » en anglais). Seuls les nœuds du sous-réseau d'acheminement, donc pas la passerelle GW 110, sont capables d'interpréter cette option et de lui associer une valeur prédéfinie, e.g. 1234. Dans un mode particulier de réalisation, la requête comprend une option 55, connue sous le nom de « Parameter Request List » en anglais, contenant le numéro de l'option propriétaire, e.g. 224. La requête de type DHCPDISCOVER comprend également l'adresse physique (ou adresse MAC) du nœud N2 122. Le nœud N2 122 étant directement connecté à la passerelle GW 110, cette dernière reçoit la requête DHCPDISCOVER.

Lors d'une étape 403, la passerelle GW 110 qui n'est pas capable de comprendre l'option va donc émettre une réponse de type DHCPOFFER ne possédant pas l'option 224, ou éventuellement possédant l'option 224 mais dont la valeur ne correspondrait pas à la valeur prédéfinie, e.g. 1234. La réponse de type DHCPOFFER comprend notamment l'adresse IP du serveur DHCP, ainsi que l'adresse IP qu'il propose au nœud.

Lors d'une étape 404, la réponse de type DHCPOFFER est reçue par le nœud N2 122 qui l'analyse. Le nœud N2 122 en déduit qu'il est directement relié à la passerelle GW 110 du fait de l'absence de l'option propriétaire 224 ou du fait de la présence de cette option 224 mais avec une valeur différente de la valeur prédéfinie. Une fois son adresse IP obtenue, le nœud N2 122 peut ainsi d'accueillir d'autres dispositifs, tels que le nœud N4 124.

En référence à la Fig. 4B, dans une étape 405, le nœud 124 N4 diffuse (« broadcast » en anglais) lors de sa mise sous-tension une requête DHCPDISCOVER sur le sous-réseau d'acheminement avec au moins une option propriétaire, e.g. située dans l'intervalle 224 à 254. Dans un mode particulier de réalisation, la requête comprend une option 55, connue sous le nom de « Parameter Request List » en anglais, contenant le numéro de l'option propriétaire, e.g. 224.

Dans une étape 406, le nœud N2 122 intercepte la requête DHCPDISCOVER et la transmet en amont sur le sous-réseau d'acheminement lors d'une étape 407. La requête DHCPDISCOVER en provenance du nœud N4 124 et transmise par le nœud N2 122 est reçue par la passerelle GW 110.

Dans une étape 409, la passerelle GW 110 qui n'est pas capable de comprendre l'option va donc émettre une réponse de type DHCPOFFER ne possédant pas l'option 224, ou éventuellement possédant l'option 224 mais dont la valeur ne correspond pas à la valeur prédéfinie, e.g. 1234.

Dans une étape 410, le nœud N2 122 intercepte la réponse de type DHCPOFFER. Il le complète alors par l'option 224 avec la valeur prédéfinie, e.g. 1234. Plus généralement, le nœud N2 122 complète par l'option 224 avec la valeur prédéfinie tous les messages de type DHCPOFFER reçus en amont de la passerelle GW 110 avant de les transmettre vers l'aval. Le nœud N2 122 indique ainsi qu'il est intercalé entre la passerelle GW 110 et le reste du sous-réseau d'acheminement. Dans une variante, le nœud N2 122 peut compléter les messages DHCPACK qui sont les réponses à des requêtes DHCPREQUEST par l'option 224 avec la valeur prédéfinie.

Dans une étape 411, le nœud N2 122 transmet vers l'aval sur le sous-réseau d'acheminement la réponse DHCPOFFER dans lequel l'option 224 a la valeur prédéfinie.

Dans une étape 412, le nœud N4 124 reçoit une réponse de type DHCPOFFER. En analysant la réponse, le nœud N4 124 en déduit qu'il est connecté à la passerelle au travers d'un autre nœud. En effet, dans le cas contraire, la réponse de type DHCPOFFER ne contiendrait pas l'option 224 ou contiendrait l'option 224 avec une valeur différente de la valeur prédéfinie. Une fois son adresse IP obtenue, le nœud N4 124 est ainsi en service et peut à son tour accueillir d'autres dispositifs.

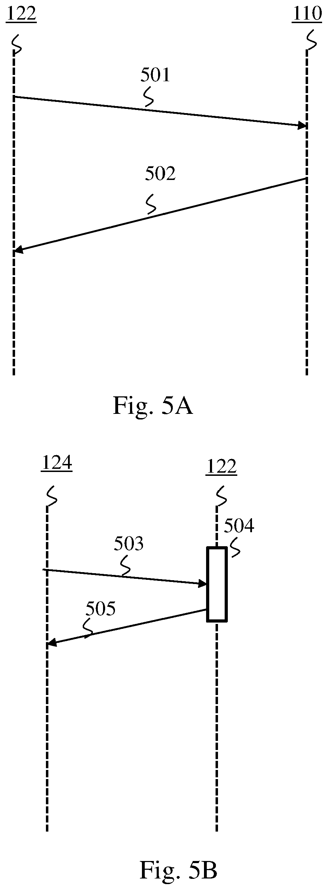

Les Figs **5A** et **5B** illustrent schématiquement un procédé d'identification des nœuds qui sont directement reliés à la passerelle GW 110 d'accès à l'Internet selon un deuxième mode de réalisation qui utilise une donnée TTL (acronyme anglais de « Time To Live ») placée au niveau de l'entête des paquets IP.

Cette donnée indique le nombre maximal d'équipements actifs traversables par le paquet IP (routeurs de transit) pour atteindre un équipement désigné par son adresse IP. Ce mécanisme est décrit dans les documents RFC 792 et RFC 777. Quand un routeur de transit arrive à la valeur 0 après avoir décrémenté ce champ, le paquet est détruit et un message de dépassement de temps, e.g. un message ICMP Time Exceeded (ICMP est l'acronyme anglais de « Internet Control Message Protocol »), est envoyé vers la source. Chaque nœud du sous-réseau d'acheminement, à réception d'un paquet IP, décrémente la donnée TTL avant de le transmettre au prochain nœud du sous-réseau d'acheminement. Ainsi, un nœud du sous-réseau d'acheminement en émettant une requête IP à destination de la passerelle GW 110 avec dans son entête une valeur de TTL égale à 1, peut identifier la présence de nœuds entre lui-même et la passerelle GW 110 et donc déterminer s'il est ou non directement relié à la passerelle GW 110. Si le nœud reçoit en réponse à sa requête un message de type réponse echo alors le nœud est directement relié à la passerelle GW 110 sinon, i.e. si le nœud reçoit un message de dépassement de temps, le nœud n'est pas directement relié à la passerelle GW 110.

Les Figs 5A et 5B décrivent le procédé d'identification pour la branche comprenant les nœuds N2 et N4 en utilisant une commande PING. Cette commande qui permet de tester le réseau, envoie un message à un destinataire et lui demande de le restituer. Le même procédé s'applique aux autres nœuds du sous réseau d'acheminement.

La Fig. 5A décrit le procédé en lien avec le nœud N2 122 et la Fig. 5B décrit le procédé en lien avec le nœud N4 124.

En référence à la Fig. 5A, lors d'une étape 501, le nœud N2 122 émet un message, e.g. un message de type ICMP ECHO, comportant dans son entête une valeur de TTL égale à 1 à destination de la passerelle GW 110 identifiée par son adresse IP. Ce message est directement reçu par la passerelle GW 110.

Lors d'une étape 502, la passerelle GW 110 répond en envoyant un message de type réponse echo, e.g. un message de type ICMP ECHO REPLY, à destination du nœud N2 122 identifié par son adresse IP. Le message reçu par le nœud N2 122 étant un message de type réponse echo, le nœud N2 122 en déduit qu'il est directement relié à la passerelle GW 110.

En référence à la Fig. 5B, lors d'une étape 503, le nœud N4 124 émet, à destination de la passerelle GW 110, un message, e.g. un message de type ICMP ECHO, comportant dans son entête une valeur de TTL égale à 1. La passerelle GW 110 est identifiée par son adresse IP.

Lors d'une étape 504, le message de type ICMP ECHO est reçu par le nœud N2 122 qui décrémente la valeur de TTL. La valeur de TTL est alors égale à 0. Le message de type ICMP ECHO est donc détruit par le nœud N2 122.

Lors d'une étape 502, le nœud N2 122 envoie un message de dépassement de temps, e.g. un message de type ICMP Time Exceeded, à destination du nœud N4 124 identifié par son adresse IP. Le message reçu par le nœud N2 122 étant un message de dépassement de temps, le nœud N4 124 en déduit qu'il n'est pas directement relié à la passerelle GW 110.

La **Fig. 6** illustre schématiquement un procédé d'identification des nœuds qui sont directement reliés à la passerelle GW 110 d'accès à l'Internet selon un troisième mode de réalisation qui met en œuvre au moins une option propriétaire du protocole ICMPv6 défini par le document normatif RFC 4861. Ce document décrit notamment des messages et un protocole NDP (acronyme anglais de « Neighbor Discovery Protocol) permettant de déterminer les relations entre nœuds voisins. Comme pour le procédé décrit en référence aux Figs 4A et 4B, ce mode de réalisation utilise une option propriétaire du protocole ICMPv6 dont un paramètre comprend une valeur prédéfinie, e.g. la valeur 1234. De manière générale, ce mode de réalisation s'applique à tout protocole mettant en œuvre des échanges de messages de type ROUTER SOLICITATION et ROUTER ADVERTISEMENT.

La Fig. 6 décrit le procédé d'identification pour la branche comprenant les nœuds N2 et N4. Le même procédé s'applique aux autres nœuds du sous réseau d'acheminement.

Lors d'une étape 601, le nœud N2 122 émet en point-multipoint (« multicast » en anglais) sur le sous-réseau d'acheminement une requête de type ROUTER SOLICITATION. La requête est reçue par la passerelle GW 110.

Lors d'une étape 602, la passerelle GW 110 répond en envoyant une réponse de type ROUTER ADVERTISEMENT ne possédant pas l'option 224, ou éventuellement possédant l'option 224 mais dont la valeur ne correspondrait pas à la valeur prédéfinie, e.g. 1234.

Lors d'une étape 603, la réponse de type ROUTER ADVERTISEMENT est reçue par le nœud N2 122 qui l'analyse. Le nœud N2 122 en déduit qu'il est directement relié à la passerelle du fait de l'absence de l'option propriétaire 224 ou du fait de la présence de cette option 224 mais avec une valeur différente de la valeur prédéfinie.

Lors d'une étape 604, le nœud N4 124 émet en point-multipoint sur le sous-réseau d'acheminement une requête ROUTER SOLICITATION. La requête est reçue par le nœud N2 122.

Lors d'une étape 605, le nœud N2 122 répond en envoyant une réponse de type ROUTER ADVERTISEMENT comprenant l'option 224 avec la valeur prédéfinie, e.g. 1234.

Lors d'une étape 606, la réponse de type ROUTER ADVERTISEMENT est reçue par le nœud N4 124 qui l'analyse. Le nœud N4 124 en déduit qu'il n'est pas directement relié à la passerelle GW 110 du fait de la présence de l'option propriétaire 224 avec la valeur prédéfinie. En effet, le nœud N4 124 est relié à la passerelle GW 110 au travers du nœud N2 122.

La **Fig. 7** illustre schématiquement un procédé de sélection d'un nœud maître principal du sous-réseau d'acheminement parmi les nœuds identifiés par le procédé illustré par les Figs 4A, 4B, 5A, 5B et 6. Le procédé illustré par la Fig. 7 est mis en œuvre par chacun des nœuds maîtres auxiliaires. Le procédé est décrit pour un nœud maître auxiliaire dit nœud maître auxiliaire courant.

Les nœuds maîtres auxiliaires qui sont directement reliés à la passerelle GW 110 ont pour fonction de contrôler le trafic dans le sous-réseau d'acheminement. Parmi ces nœuds maîtres auxiliaires, un est sélectionné en tant que nœud maître principal au travers duquel la configuration du système d'extension de couverture de communication sans-fil est définie.

Dans une étape 701, le nœud maître auxiliaire courant détermine au moins un paramètre le caractérisant. Par exemple, le nœud maître auxiliaire courant détermine le nombre de nœuds présents dans sa branche. Si le nœud maître auxiliaire courant est le nœud N2 122 alors lors de l'étape 701, il détermine la présence de 4 nœuds dans sa branche (y compris lui-même). Le nœud maître auxiliaire courant transmet ce paramètre aux autres nœuds maîtres auxiliaires.

Dans une étape 702, le nœud maître auxiliaire courant reçoit des paramètres correspondants, i.e. de même nature, en provenance de chacun des autres nœuds maîtres auxiliaires. Par exemple, le nœud N2 122 reçoit l'information du nœud N1 121 que sa branche ne contient qu'un seul nœud. Il reçoit l'information du nœud N6 126 que sa branche contient 5 nœuds. Les nœuds échangent ces informations grâce à des liaisons logiques, par exemple des communications IP ou des tunnels chiffrés ou des communications selon un protocole de communication propriétaire. Dans une variante, les nœuds maîtres auxiliaires envoient périodiquement des trames broadcast pour communiquer à l'ensemble des autres nœuds maîtres auxiliaires les informations les caractérisant. Ainsi, le nœud maître auxiliaire courant peut écouter en permanence les annonces faites par l'ensemble des autres nœuds maîtres auxiliaires et ainsi connaître leur nombre et leurs caractéristiques, e.g. leur rôle actuel (maître principal, maître auxiliaire ou esclave), la performance de leur lien avec la passerelle, le nombre de nœuds dans leur branche, etc.

Dans une étape 703, le nœud maître auxiliaire courant en déduit son rôle en comparant son paramètre, e.g. le nombre de nœuds dans sa branche ou la performance de son lien avec la passerelle GW 110, avec les paramètres reçus des autres nœuds maîtres auxiliaires. Par exemple, si le nœud maître auxiliaire courant est le nœud N2 122 alors il en déduit que son rôle est un rôle de maître auxiliaire car il est informé que le nœud N6 126 est le nœud dont la branche contient le plus grand nombre de nœuds. Si le nœud maître auxiliaire courant est le nœud N6 126 alors il en déduit que son rôle est un rôle de maître principal car il est informé qu'il appartient à la branche contenant le plus grand nombre de nœuds. Le nœud N6 126 est donc élu nœud maître principal. En attribuant le rôle de maître principal au nœud directement connecté à la passerelle GW 110 et appartenant à la branche ayant le plus grand nombre de nœuds, le trafic nécessaire pour envoyer une configuration de fonctionnalité est minimisé. Par exemple, dans le cas de la Fig.1 avec le nœud N6 126 comme nœud maître principal, 15 sauts sont nécessaires pour joindre tous les autres nœuds du sous-réseau d'acheminement. Si le nœud N1 121 est élu nœud maître principal, 19 sauts sont nécessaires pour joindre tous les autres nœuds du sous-réseau d'acheminement. Si le nœud N2 122 est élu nœud maître principal, 16 sauts sont nécessaires pour joindre tous les autres nœuds du sous-réseau d'acheminement.

Le procédé illustré par la Fig. 7 étant mis en œuvre par chacun des nœuds maîtres auxiliaires qui ont connaissance des caractéristiques des autres nœuds maîtres auxiliaires, ils aboutissent tous à la même conclusion quant à leurs rôles. S'il existe déjà un nœud maître principal, celui-ci met également en œuvre le procédé car son rôle peut être remis en cause notamment en cas de modification de la topologie du sous-réseau d'acheminement, e.g. par ajout d'un nouveau nœud.

Dans le cas où deux nœuds directement connectés à la passerelle GW 110 appartiennent à des branches comprenant le même nombre de nœuds, un second critère est défini pour permettre de sélectionner un nœud maître principal. Par exemple, le nœud ayant le numéro de série le plus grand est sélectionné. Dans une variante, le nœud ayant le numéro de série le plus petit est sélectionné.

Divers paramètres caractérisant les nœuds peuvent être pris en compte pour sélectionner le nœud maître principal comme par exemple :
- le nombre de nœuds dans leur branche ;
- la performance de leur lien avec la passerelle en termes de bande passante, de taux d'erreur et/ou de temps de latence ;
- le temps total de fonctionnement du nœud en tant que maître principal ;
- une combinaison, e.g. une combinaison linéaire, d'un ou plusieurs de ces paramètres.

Si aucun nœud maître principal n'est initialement présent, un nœud nouvellement connecté peut devenir nœud maître principal directement à condition qu'il soit directement connecté à la passerelle.

Si un nœud change de rôle, il en informe les autres nœuds du sous-réseau d'acheminement. Une négociation peut aussi intervenir avec le nœud qui était jusqu'alors le nœud maître principal. Des règles peuvent être définies comme par exemple, ne jamais remplacer un nœud maître principal existant ou remplacer le nœud maître principal existant par un autre nœud si cet autre nœud a déjà eu ce rôle de maître principal plus longtemps que le nœud maître principal existant ou remplacer le nœud maître principal existant par un autre nœud si cet autre nœud a un lien avec la passerelle GW 110 plus performant (e.g. la performance étant mesurée en termes de bande passante, de taux d'erreur, de temps de latence, etc) que le nœud maître principal existant.

La sélection du maître principal peut être initiée à tout moment par l'envoi d'un message sur un bus de communication par n'importe quel nœud, par exemple parce que les critères ayant mené au choix actuel ont évolué du fait par exemple d'un changement de topologie du sous-réseau d'acheminement (e.g., ajout ou suppression d'un nœud, plus généralement d'un dispositif, au réseau local LAN). Dans le cas de notre exemple, un changement de topologie remet en effet en cause les calculs de saut d'équipement et rend potentiellement inadapté le nœud maître principal actuel.

## Revendications

1. Un procédé de configuration d'un système d'extension de couverture de communication sans-fil comportant un sous-réseau d'acheminement en forme d'arbre comportant une pluralité de nœuds (121, 122, 123, 124) implémentant une fonctionnalité de point d'accès d'un même réseau de communication sans-fil, le système d'extension de couverture de communication sans-fil étant adapté pour permettre de connecter des dispositifs (110, 141, 142, 143, 144) auxdits nœuds (121, 122, 123, 124) par le biais du réseau de communication sans-fil ou de manière filaire afin de former un réseau local, au moins deux nœuds de ladite pluralité de nœuds étant connectés directement à une passerelle d'accès à l'Internet, dite passerelle, **caractérisé en ce que** le procédé comprend les étapes suivantes :
- identifier (301) lesdits au moins deux nœuds (121, 122, 126) connectés directement à ladite passerelle (110) parmi lesdits nœuds du sous-réseau d'acheminement ;
- sélectionner (302) un unique nœud parmi lesdits au moins deux nœuds identifiés pour être le nœud au travers duquel une configuration dudit système d'extension de couverture de communication sans-fil est définie en comparant un paramètre associé à un desdits au moins deux nœuds avec un paramètre correspondant associé à un autre desdits au moins deux nœuds, ledit paramètre pour un nœud donné étant : un nombre de nœuds dans une branche dudit arbre auquel appartient ledit nœud donné ou un paramètre de performance en termes de bande passante, de taux d'erreur et/ou de temps de latence d'un lien entre ledit nœud donné et ladite passerelle ou un temps de fonctionnement du nœud donné en tant que nœud au travers duquel une configuration dudit système d'extension de couverture de communication sans-fil est définie ou une combinaison d'au moins deux de ces paramètres; et
- envoyer (303) la configuration du système d'extension de couverture de communication sans-fil définie depuis le nœud sélectionné vers l'ensemble des autres nœuds du sous-réseau d'acheminement.

2. Le procédé selon la revendication 1, dans lequel, identifier (301) lesdits au moins deux nœuds (121, 122, 126) connectés à ladite passerelle (110) parmi lesdits nœuds du sous-réseau d'acheminement comprend pour chaque nœud du sous-réseau d'acheminement:
- diffuser une requête pour localiser au moins un serveur disponible afin d'obtenir une adresse IP, ladite requête comprenant l'adresse MAC dudit nœud et une option propriétaire;
- recevoir en retour une réponse comprenant une adresse IP pour ledit nœud;
- en déduire que ledit nœud est directement connecté à ladite passerelle dans le cas où ladite réponse comprend ladite option propriétaire avec une valeur prédéfinie et en déduire que ledit nœud n'est pas directement connecté à ladite passerelle sinon.

3. Le procédé selon la revendication 2, dans lequel, ledit serveur, ladite requête et ladite réponse sont conformes au protocole DHCPv4 ou au protocole DHCPv6.

4. Le procédé selon la revendication 1, dans lequel, identifier (301) lesdits au moins deux nœuds (121, 122, 126) connectés à ladite passerelle (110) parmi lesdits nœuds du sous-réseau d'acheminement comprend pour chaque nœud du sous-réseau d'acheminement:
- envoyer un paquet IP comprenant dans son entête une donnée indiquant le nombre maximal de routeurs pouvant être traversés par ledit paquet, ladite donnée ayant la valeur 1 ;
- en déduire que ledit nœud n'est pas directement connecté à ladite passerelle dans le cas où il reçoit en retour une réponse indiquant un dépassement de la durée de vie de ladite requête et en déduire que ledit nœud est directement connecté à ladite passerelle sinon.

5. Le procédé selon la revendication 1, dans lequel, identifier (301) lesdits au moins deux nœuds (121, 122, 126) connectés à ladite passerelle (110) parmi lesdits nœuds du sous-réseau d'acheminement comprend pour chaque nœud du sous-réseau d'acheminement:
- envoyer en point à multipoint une requête pour localiser au moins un routeur;
- recevoir en retour une réponse;
- en déduire que ledit nœud est directement connecté à ladite passerelle dans le cas où ladite réponse comprend une option propriétaire avec une valeur prédéfinie et en déduire que ledit nœud n'est pas directement connecté à ladite passerelle sinon.

6. Le procédé selon la revendication 5, dans lequel ladite requête et ladite réponse sont conformes au protocole de découverte de voisinage de IPv6.

7. Le procédé selon l'une des revendications 1 à 6, dans lequel, sélectionner (302) un unique nœud parmi lesdits au moins deux nœuds identifiés comprend sélectionner le nœud appartenant à une branche dudit arbre comprenant le plus grand nombre de nœuds.

8. Le procédé selon la revendication 7, dans lequel, sélectionner le nœud appartenant à une branche dudit arbre comprenant le plus grand nombre de nœuds comprend sélectionner le nœud ayant un plus grand numéro de série dans le cas où lesdits au moins deux nœuds identifiés appartiennent à des branches dudit arbre ayant le même nombre de nœuds.

9. Le procédé selon l'une des revendications 1 à 6, dans lequel, sélectionner (302) un unique nœud parmi lesdits au moins deux nœuds identifiés comprend sélectionner le nœud dont un lien avec la passerelle est plus performant en termes de bande passante, de taux d'erreur et/ou de temps de latence.

10. Le procédé selon l'une des revendications 1 à 9, dans lequel, envoyer (303) la configuration du système d'extension de couverture de communication sans-fil depuis le nœud sélectionné vers l'ensemble des autres nœuds du sous-réseau d'acheminement comprend envoyer un ensemble de paramètres permettant la configuration de fonctionnalités mise en œuvre par lesdits nœuds.

11. Le procédé selon la revendication 10, dans lequel lesdites fonctionnalités comprennent des fonctionnalités de définition et de partage de la configuration du système d'extension de couverture de communication sans-fil, de relais DNS, de relais DHCP, de pare-feu et/ou de contrôle parental.

12. Un système d'extension de couverture de communication sans-fil comportant un sous-réseau d'acheminement en forme d'arbre comportant une pluralité de nœuds (121, 122, 123, 124) implémentant une fonctionnalité de point d'accès d'un même réseau de communication sans-fil, le système d'extension de couverture de communication sans-fil étant adapté pour permettre de connecter des dispositifs (110, 141, 142, 143, 144) auxdits nœuds (121, 122, 123, 124) par le biais du réseau de communication sans-fil ou de manière filaire afin de former un réseau local, au moins deux nœuds de ladite pluralité de nœuds étant connectés directement à une passerelle d'accès à l'Internet, dite passerelle, **caractérisé en ce que** le système comprend :
- des moyens pour identifier lesdits au moins deux nœuds (121, 122, 126) connectés directement à ladite passerelle (110) parmi lesdits nœuds du sous-réseau d'acheminement ;
- des moyens pour sélectionner un unique nœud parmi lesdits au moins deux nœuds identifiés pour être le nœud au travers duquel une configuration dudit système d'extension de couverture de communication sans-fil est définie en comparant un paramètre associé à un desdits au moins deux nœuds avec un paramètre correspondant associé à un autre desdits au moins deux nœuds, ledit paramètre pour un nœud donné étant : un nombre de nœuds dans une branche dudit arbre auquel appartient ledit nœud donné ou un paramètre de performance en termes de bande passante, de taux d'erreur et/ou de temps de latence d'un lien entre ledit nœud donné et ladite passerelle ou un temps de fonctionnement du nœud donné en tant que nœud au travers duquel une configuration dudit système d'extension de couverture de communication sans-fil est définie ou une combinaison d'au moins deux de ces paramètres; et
- des moyens pour envoyer la configuration du système d'extension de couverture de communication sans-fil définie depuis le nœud sélectionné vers l'ensemble des autres nœuds du sous-réseau d'acheminement.

13. Un nœud;appelé nœud considéré, destiné à être utilisé dans un système d'extension de couverture de communication sans-fil comportant un sous-réseau d'acheminement en forme d'arbre comportant une pluralité de nœuds (121, 122, 123, 124) implémentant une fonctionnalité de point d'accès d'un même réseau de communication sans-fil dont le nœud considéré, le système d'extension de couverture de communication sans-fil étant adapté pour permettre de connecter des dispositifs (110, 141, 142, 143, 144) auxdits nœuds (121, 122, 123, 124) par le biais du réseau de communication sans-fil ou de manière filaire afin de former un réseau local, **caractérisé en ce que** le nœud considéré comprend :
- des moyens pour identifier si ledit nœud considéré est directement ou indirectement connecté à ladite passerelle (110);
- des moyens pour déterminer si ledit nœud considéré est sélectionné parmi lesdits nœuds du sous-réseau d'acheminement directement connectés à la passerelle pour être le nœud au travers duquel une configuration dudit système d'extension de couverture de communication sans-fil est définie, ladite sélection étant effectuée en comparant un paramètre associé à un desdits au moins deux nœuds avec un paramètre correspondant associé à un autre desdits au moins deux nœuds, ledit paramètre pour un nœud donné étant : un nombre de nœuds dans une branche dudit arbre auquel appartient ledit nœud donné ou un paramètre de performance en termes de bande passante, de taux d'erreur et/ou de temps de latence d'un lien entre ledit nœud donné et ladite passerelle ou un temps de fonctionnement du nœud donné en tant que nœud au travers duquel une configuration dudit système d'extension de couverture de communication sans-fil est définie ou une combinaison d'au moins deux de ces paramètres,
- des moyens pour informer, via le sous-réseau d'acheminement, si le nœud considéré est le nœud sélectionné parmi lesdits nœuds du sous-réseau d'acheminement pour être le nœud au travers duquel la configuration dudit système d'extension de couverture de communication sans-fil est définie; et
- des moyens pour envoyer la configuration du système d'extension de couverture de communication sans-fil définie vers l'ensemble des autres nœuds du sous-réseau d'acheminement dans le cas où ledit nœud considéré est le nœud sélectionné.

14. Un programme d'ordinateur, **caractérisé en ce qu'**il comprend des instructions pour mettre en œuvre le procédé selon l'une quelconque des revendications 1 à 11, lorsque ledit programme est exécuté par au moins un processeur.

15. Des moyens de stockage, **caractérisés en ce qu'**ils stockent un programme d'ordinateur comprenant des instructions pour mettre en œuvre, le procédé selon l'une quelconque des revendications 1 à 11, lorsque ledit programme est exécuté par au moins un processeur.

## Patentansprüche

1. Verfahren zur Konfiguration eines Systems zur Erweiterung der drahtlosen Kommunikationsabdeckung, umfassend ein Routing-Teilnetz in Baumform, umfassend eine Vielzahl von Knoten (121, 122, 123, 124), die eine Funktion eines Zugangspunktes eines gemeinsamen drahtlosen Kommunikationsnetzes implementieren, wobei das System zur Erweiterung der drahtlosen Kommunikationsabdeckung dazu geeignet ist, eine Verbindung von Vorrichtungen (110, 141, 142, 143, 144) mit den Knoten (121, 122, 123, 124) über das drahtlose Kommunikationsnetz oder drahtgebunden zu ermöglichen, um ein lokales Netz zu bilden, wobei mindestens zwei Knoten der Vielzahl von Knoten direkt mit einem Internet-Zugangsgateway, genannt Gateway, verbunden sind, **dadurch gekennzeichnet, dass** das Verfahren die folgenden Schritte umfasst:
- Erkennen (301) der mindestens zwei Knoten (121, 122, 126), die direkt mit dem Gateway (110) verbunden sind, unter den Knoten des Routing-Teilnetzes;
- Auswählen (302) eines einzigen Knotens unter den mindestens zwei erkannten Knoten als den Knoten, über den eine Konfiguration des Systems zur Erweiterung der drahtlosen Kommunikationsabdeckung definiert wird, indem ein Parameter, der einem der mindestens zwei Knoten zugeordnet ist, mit einem entsprechenden Parameter verglichen wird, der einem anderen der mindestens zwei Knoten zugeordnet ist, wobei der Parameter für einen gegebenen Knoten Folgendes ist: eine Anzahl von Knoten in einem Zweig des Baums, zu dem der gegebene Knoten gehört, oder ein Leistungsparameter bezüglich der Bandbreite, der Fehlerquote und/oder der Latenzzeit einer Verbindung zwischen dem gegebenen Knoten und dem Gateway oder eine Betriebszeit des gegebenen Knotens als Knoten, über den eine Konfiguration des Systems zur Erweiterung der drahtlosen Kommunikationsabdeckung definiert ist, oder eine Kombination von mindestens zwei dieser Parameter; und
- Senden (303) der definierten Konfiguration des Systems zur Erweiterung der drahtlosen Kommunikationsabdeckung von dem ausgewählten Knoten an die Gesamtheit der anderen Knoten des Routing-Teilnetzes.

2. Verfahren nach Anspruch 1, wobei Erkennen (301) der mindestens zwei Knoten (121, 122, 126), die mit dem Gateway (110) verbunden sind, unter den Knoten des Routing-Teilnetzes für jeden Knoten des Routing-Teilnetzes umfasst:
- Verbreiten einer Anfrage zur Lokalisierung mindestens eines verfügbaren Servers, um eine IP-Adresse zu erhalten, wobei die Anfrage die MAC-Adresse des Knotens und eine proprietäre Option umfasst;
- Empfangen einer Antwort, die eine IP-Adresse für den Knoten umfasst, als Rückmeldung;
- daraus Ableiten, dass der Knoten in dem Fall, in dem die Antwort die proprietäre Option mit einem vordefinierten Wert umfasst, direkt mit dem Gateway verbunden ist, und daraus Ableiten, dass der Knoten andernfalls nicht direkt mit dem Gateway verbunden ist.

3. Verfahren nach Anspruch 2, wobei der Server, die Anfrage und die Antwort dem Protokoll DHCPv4 oder dem Protokoll DHCPv6 entsprechen.

4. Verfahren nach Anspruch 1, wobei Erkennen (301) der mindestens zwei Knoten (121, 122, 126), die mit dem Gateway (110) verbunden sind, unter den Knoten des Routing-Teilnetzes für jeden Knoten des Routing-Teilnetzes umfasst:
- Senden eines IP-Pakets, umfassend eine Dateneinheit im Kopffeld, die die maximale Anzahl von Routern angibt, die vom Paket durchlaufen werden können, wobei die Dateneinheit den Wert 1 hat;
- daraus Ableiten, dass der Knoten in dem Fall, in dem er eine Antwort als Rückmeldung erhält, die ein Überschreiten der Lebensdauer der Anfrage angibt, nicht direkt mit dem Gateway verbunden ist, und daraus Ableiten, dass der Knoten andernfalls direkt mit dem Gateway verbunden ist.

5. Verfahren nach Anspruch 1, wobei Erkennen (301) der mindestens zwei Knoten (121, 122, 126), die mit dem Gateway (110) verbunden sind, unter den Knoten des Routing-Teilnetzes für jeden Knoten des Routing-Teilnetzes umfasst:
- Senden einer Punkt-zu-Mehrpunkt-Anfrage, um mindestens einen Router zu lokalisieren;
- Empfangen einer Antwort als Rückmeldung;
- daraus Ableiten, dass der Knoten in dem Fall, in dem die Antwort eine proprietäre Option mit einem vordefinierten Wert umfasst, direkt mit dem Gateway verbunden ist, und daraus Ableiten, dass der Knoten andernfalls nicht direkt mit dem Gateway verbunden ist.

6. Verfahren nach Anspruch 5, wobei die Anfrage und die Antwort dem Protokoll zur Erkennung des Nachbarn von IPv6 entspricht.

7. Verfahren nach einem der Ansprüche 1 bis 6, wobei Auswählen (302) eines einzigen Knotens unter den mindestens zwei erkannten Knoten Auswählen des Knotens umfasst, der zu einem Zweig des Baums gehört, der die größte Anzahl von Knoten umfasst.

8. Verfahren nach Anspruch 7, wobei Auswählen des Knotens, der zu einem Zweig des Baums gehört, der die größte Anzahl von Knoten umfasst, in dem Fall, in dem mindestens zwei erkannte Knoten zu Zweigen des Baums gehören, die dieselbe Anzahl von Knoten aufweisen, Auswählen des Knotens umfasst, der die höchste Seriennummer hat.

9. Verfahren nach einem der Ansprüche 1 bis 6, wobei Auswählen (302) eines einzigen Knotens unter den mindestens zwei erkannten Knoten Auswählen des Knotens umfasst, dessen Verbindung mit dem Gateway bezüglich der Bandbreite, der Fehlerquote und/oder der Latenzzeit leistungsstärker ist.

10. Verfahren nach einem der Ansprüche 1 bis 9, wobei Senden (303) der Konfiguration des Systems zur Erweiterung der drahtlosen Kommunikationsabdeckung von dem ausgewählten Knoten an die Gesamtheit der anderen Knoten des Routing-Teilnetzes Senden eines Satzes von Parametern umfasst, die die Konfiguration von Funktionen ermöglicht, die durch die Knoten umgesetzt werden.

11. Verfahren nach Anspruch 10, wobei die Funktionen Funktionen einer Definition und einer Weitergabe der Konfiguration des Systems zur Erweiterung der drahtlosen Kommunikationsabdeckung, eines DNS-Relais, eines DHCP-Relais, einer Firewall und/oder einer elterlichen Kontrolle umfassen.

12. System zur Erweiterung der drahtlosen Kommunikationsabdeckung, umfassend ein Routing-Teilnetz in Baumform, umfassend eine Vielzahl von Knoten (121, 122, 123, 124), die eine Funktion eines Zugangspunktes eines gemeinsamen drahtlosen Kommunikationsnetzes implementieren, wobei das System zur Erweiterung der drahtlosen Kommunikationsabdeckung dazu geeignet ist, eine Verbindung von Vorrichtungen (110, 141, 142, 143, 144) mit den Knoten (121, 122, 123, 124) über das drahtlose Kommunikationsnetz oder drahtgebunden zu ermöglichen, um ein lokales Netz zu bilden, wobei mindestens zwei Knoten der Vielzahl von Knoten direkt mit einem Internet-Zugangsgateway, genannt Gateway, verbunden sind, **dadurch gekennzeichnet, dass** das System umfasst:
- Mittel zum Erkennen der mindestens zwei Knoten (121, 122, 126), die direkt mit dem Gateway (110) verbunden sind, unter den Knoten des Routing-Teilnetzes;
- Mittel zum Auswählen eines einzigen Knotens unter den mindestens zwei erkannten Knoten als den Knoten, über den eine Konfiguration des Systems zur Erweiterung der drahtlosen Kommunikationsabdeckung definiert wird, indem ein Parameter, der einem der mindestens zwei Knoten zugeordnet ist, mit einem entsprechenden Parameter verglichen wird, der einem anderen der mindestens zwei Knoten zugeordnet ist, wobei der Parameter für einen gegebenen Knoten Folgendes ist: eine Anzahl von Knoten in einem Zweig des Baums, zu dem der gegebene Knoten gehört, oder ein Leistungsparameter bezüglich der Bandbreite, der Fehlerquote und/oder der Latenzzeit einer Verbindung zwischen dem gegebenen Knoten und dem Gateway oder eine Betriebszeit des gegebenen Knotens als Knoten, über den eine Konfiguration des Systems zur Erweiterung der drahtlosen Kommunikationsabdeckung definiert ist, oder eine Kombination von mindestens zwei dieser Parameter; und
- Mittel zum Senden der definierten Konfiguration des Systems zur Erweiterung der drahtlosen Kommunikationsabdeckung von dem ausgewählten Knoten an die Gesamtheit der anderen Knoten des Routing-Teilnetzes.

13. Knoten, betrachteter Knoten genannt, der dazu bestimmt ist, verwendet zu werden in einem System zur Erweiterung der drahtlosen Kommunikationsabdeckung, umfassend ein Routing-Teilnetz in Baumform, umfassend eine Vielzahl von Knoten (121, 122, 123, 124), die eine Funktion eines Zugangspunktes eines gemeinsamen drahtlosen Kommunikationsnetzes implementieren, darunter der betrachtete Knoten, wobei das System zur Erweiterung der drahtlosen Kommunikationsabdeckung dazu geeignet ist, eine Verbindung von Vorrichtungen (110, 141, 142, 143, 144) mit den Knoten (121, 122, 123, 124) über das drahtlose Kommunikationsnetz oder drahtgebunden zu ermöglichen, um ein lokales Netz zu bilden, **dadurch gekennzeichnet, dass** der betrachtete Knoten umfasst:
- Mittel zum Erkennen, ob der betrachtete Knoten direkt oder indirekt mit dem Gateway (110) verbunden ist;
- Mittel zum Bestimmen, ob der betrachtete Knoten unter den mit dem Gateway direkt verbundenen Knoten des Routing-Teilnetzes als der Knoten ausgewählt wird, über den eine Konfiguration des Systems zur Erweiterung der drahtlosen Kommunikationsabdeckung definiert wird, wobei die Auswahl erfolgt, indem ein Parameter, der einem der mindestens zwei Knoten zugeordnet ist, mit einem entsprechenden Parameter verglichen wird, der einem anderen der mindestens zwei Knoten zugeordnet ist, wobei der Parameter für einen gegebenen Knoten Folgendes ist: eine Anzahl von Knoten in einem Zweig des Baums, zu dem der gegebene Knoten gehört, oder ein Leistungsparameter bezüglich der Bandbreite, der Fehlerquote und/oder der Latenzzeit einer Verbindung zwischen dem gegebenen Knoten und dem Gateway oder eine Betriebszeit des gegebenen Knotens als Knoten, über den eine Konfiguration des Systems zur Erweiterung der drahtlosen Kommunikationsabdeckung definiert ist, oder eine Kombination von mindestens zwei dieser Parameter,
- Mittel zum Informieren über das Routing-Teilnetz, ob der betrachtete Knoten der Knoten ist, der unter den Knoten des Routing-Teilnetzes als der Knoten ausgewählt ist, über den die Konfiguration des Systems zur Erweiterung der drahtlosen Kommunikationsabdeckung definiert wird; und
- Mittel zum Senden der Konfiguration des Systems zur Erweiterung der drahtlosen Kommunikationsabdeckung an die Gesamtheit der anderen Knoten des Routing-Teilnetzes in dem Fall, in dem der betrachtete Knoten der ausgewählte Knoten ist.

14. Computerprogramm, **dadurch gekennzeichnet, dass** es Anweisungen zur Durchführung des Verfahrens nach einem der Ansprüche 1 bis 11 umfasst, wenn das Programm von mindestens einem Prozessor ausgeführt wird.

15. Speichermittel, **dadurch gekennzeichnet, dass** sie ein Computerprogramm speichern, umfassend Anweisungen zur Durchführung des Verfahrens nach einem der Ansprüche 1 bis 11, wenn das Programm von mindestens einem Prozessor ausgeführt wird.

## Claims

1. Method for configuring a wireless communication coverage extension system comprising a backhaul network in tree form, comprising a plurality of nodes (121, 122, 123, 124) implementing a functionality of access point of one and the same wireless communication network, the wireless communication coverage extension system being adapted to make it possible to connect devices (110, 141, 142, 143, 144) to said nodes (121, 122, 123, 124) by means of the wireless communication network or by cable in order to form a local area network, at least two nodes in said plurality of nodes being connected directly to an internet access gateway, referred to as a gateway, **characterised in that** the method comprises the following steps:
- identifying (301) said at least two nodes (121, 122, 126) directly connected to said gateway (110) among said nodes in the backhaul subnetwork;
- selecting (302) a single node among said at least two nodes identified in order to be the node through which a configuration of said wireless communication coverage extension system is defined by comparing a parameter associated with one of the at least two nodes to a corresponding parameter associated with another node of said at least two nodes, said parameter for a given node being: a number of nodes in a branch of said tree to which said given node belongs, a performance parameter in terms of bandwidth, error rate and/or latency time of a link between said given node and said gateway, an operating time of the given node as the node through which a configuration of said wireless communication coverage extension system is defined, or a combination of at least two of said parameters; and
- sending (303) the configuration of the wireless communication coverage extension system defined from the selected node to all the other nodes in the backhaul subnetwork.

2. Method according to claim 1, wherein identifying (301) said at least two nodes (121, 122, 126) connected to said gateway (110) among said nodes of the backhaul subnetwork comprises, for each node in the backhaul subnetwork:
- broadcasting a request for locating at least one server available in order to obtain an IP address, said request comprising the MAC address of said node and a proprietary option;
- receiving in return a response comprising an IP address for said node;
- deducing therefrom that said node is directly connected to said gateway in the case where said response comprises said proprietary option with a predefined value and deducing therefrom that said node is not directly connected to said gateway otherwise.

3. Method according to claim 2, wherein said server, said request and said response are in accordance with the DHCPv4 protocol or the DHCPv6 protocol.

4. Method according to claim 1, wherein identifying (301) said at least two nodes (121, 122, 126) connected to said gateway (110) among said nodes in the backhaul subnetwork comprises, for each node in the backhaul subnetwork:
- sending an IP packet comprising in the header thereof data indicating the maximum number of routers that said packet can pass through, said data having the value 1;
- deducing therefrom that said node is not directly connected to said gateway in the case where it receives in return a response indicating that the lifetime of said request has been exceeded and deducing therefrom that said node is directly connected to said gateway otherwise.

5. Method according to claim 1, wherein identifying (301) said at least two nodes (121, 122, 126) connected to said gateway (110) among said nodes in the backhaul subnetwork comprises, for each node in the backhaul subnetwork:
- sending in multicast mode a request for locating at least one router;
- receiving a response in return;
- deducing therefrom that said node is directly connected to said gateway in the case where said response comprises a proprietary option with a predefined value and deducing therefrom that said node is not directly connected to said gateway otherwise.

6. Method according to claim 5, wherein said request and said response are in accordance with the neighbour discovery protocol of IPv6.

7. Method according to one of claims 1 to 6, wherein selecting (302) a single node among said at least two identified nodes comprises selecting the node belonging to a branch of said tree comprising the largest number of nodes.

8. Method according to claim 7, wherein selecting the node belonging to a branch of said tree comprising the largest number of nodes comprises selecting the node having a higher serial number in the case where said at least two identified nodes belong to branches of said tree having the same number of nodes.

9. Method according to one of claims 1 to 6, wherein selecting (302) a single node among said at least two identified nodes comprises selecting the node a link of which with the gateway has a higher performance in terms of bandwidth, error rate and/or latency time.

10. Method according to one of claims 1 to 9, wherein sending (303) the configuration of the wireless communication coverage extension system from the selected node to all the other nodes in the backhaul subnetwork comprises sending a set of parameters allowing configuration of functionalities implemented by said nodes.

11. Method according to claim 10, wherein said functionalities comprise functionalities of defining and sharing the configuration of the wireless communication coverage extension system, of DNS relays, of DHCP relays, of firewall and/or of parental control.

12. Wireless communication coverage extension system, comprising a backhaul subnetwork in tree form comprising a plurality of nodes (121, 122, 123, 124) implementing a functionality of access point of one and the same wireless communication network, the wireless communication coverage extension system being adapted to make it possible to connect devices (110, 141, 142, 143, 144) to said nodes (121, 122, 123, 124) by means of the wireless communication network or by cable in order to form a local area network, at least two nodes in said plurality of nodes being connected directly to an internet access gateway, referred to as a gateway, **characterised in that** the system comprises:
- means for identifying said at least two nodes (121, 122, 126) connected directly to said gateway (110) among said nodes in the backhaul subnetwork;
- means for selecting a single node among said at least two nodes identified for being the node through which a configuration of said wireless communication coverage extension system is defined by comparing a parameter associated with one of the at least two nodes to a corresponding parameter associated with another node of said at least two nodes, said parameter for a given node being: a number of nodes in a branch of said tree to which said given node belongs, a performance parameter in terms of bandwidth, error rate and/or latency time of a link between said given node and said gateway, an operating time of the given node as the node through which a configuration of said wireless communication coverage extension system is defined, or a combination of at least two of said parameters; and
- means for sending the configuration of the wireless communication coverage extension system defined from the selected node to all the other nodes in the backhaul subnetwork.

13. Node, referred to as the node in question, intended to be used in a wireless communication coverage extension system comprising a backhaul subnetwork in tree form comprising a plurality of nodes (121, 122, 123, 124) implementing a functionality of access point of one and the same wireless communication network including the node in question, the wireless communication coverage extension system being adapted to make it possible to connect devices (110, 141, 142, 143, 144) to said nodes (121, 122, 123, 124) by means of the wireless communication network or by cable in order to form a local area network, **characterised in that** the node in question comprises:
- means for identifying whether said node in question is directly or indirectly connected to said gateway (110);
- means for determining whether said node in question is selected from among said nodes in the backhaul subnetwork that are directly connected to the gateway in order to be the node through which a configuration of said wireless communication coverage extension system is defined, said selection being achieved by comparing a parameter associated with one of the at least two nodes to a corresponding parameter associated with another node of said at least two nodes, said parameter for a given node being: a number of nodes in a branch of said tree to which said given node belongs, a performance parameter in terms of bandwidth, error rate and/or latency time of a link between said given node and said gateway, an operating time of the given node as the node through which a configuration of said wireless communication coverage extension system is defined, or a combination of at least two of said parameters,
- means for informing, via the backhaul subnetwork, whether the node in question is the node selected from among said nodes in the backhaul subnetwork in order to be the node through which the configuration of said wireless communication coverage extension system is defined; and
- means for sending the configuration of the wireless communication coverage extension system defined to all the other nodes in the backhaul subnetwork in the case where said node in question is the selected node.

14. Computer program, **characterised in that** it comprises instructions for implementing the method according to any one of claims 1 to 11, when said program is executed by at least one processor.

15. Storage means, **characterised in that** they store a computer program comprising instructions for implementing the method according to any one of claims 1 to 11 when said program is executed by at least one processor.
